(19) Europäisches Patentamt
European Patent Office
Office européen des brevets

(11) Veröffentlichungsnummer: **0 361 186 B1**

(12) **EUROPÄISCHE PATENTSCHRIFT**

(45) Veröffentlichungstag der Patentschrift: **01.06.94**

(51) Int. Cl.[5]: **C09B 19/02**, D06P 1/40

(21) Anmeldenummer: **89116729.8**

(22) Anmeldetag: **09.09.89**

# (54) Direktfarbstoffe.

(30) Priorität: **24.09.88 DE 3832531**

(43) Veröffentlichungstag der Anmeldung:
**04.04.90 Patentblatt 90/14**

(45) Bekanntmachung des Hinweises auf die Patenterteilung:
**01.06.94 Patentblatt 94/22**

(84) Benannte Vertragsstaaten:
**CH DE ES FR GB IT LI**

(56) Entgegenhaltungen:
**FR-A- 2 095 580**
**US-A- 3 009 913**

**CHEMICAL ABSTRACTS, Band 95, Nr. 1, Juli 1981, Seite 80, Zusammenfassung Nr.8786t, Columbus, Ohio, US; H. NISHI et al.: "Synthesis of 6,13-bis(arylamino)triphenodithiazines", & NIPPON KAGAKUKAISHI 1981, (2), 313-15**

**G. Ebner und D. Schelz: "Textilfärberei und Farbstoffe", Springer Verlag, 1989, Seite 231**

(73) Patentinhaber: **BAYER AG**

**D-51368 Leverkusen(DE)**

(72) Erfinder: **Henk, Hermann, Dr.**
**Roggendorfstrasse 55**
**D-5000 Köln 80(DE)**
Erfinder: **Harms, Wolfgang, Dr.**
**Osenauer Strasse 46**
**D-5068 Odenthal(DE)**
Erfinder: **Wild, Peter, Dr.**
**Droste-Hülshoff-Strasse 2**
**D-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der Erfindung sind neue Triphendioxazin- bzw. Triphendithiazin-Direktfarbstoffe der Formel

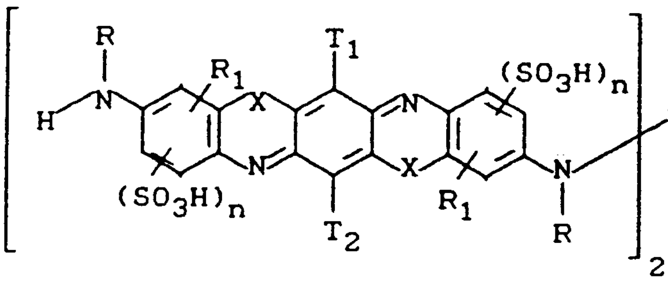

(I)

worin

R = H, gegebenenfalls substituierter $C_1$-$C_4$-Alkyl,
$R_1$ = H, $-CH_3$, $-C_2H_5$, -Cl, $-OCH_3$, $-OC_2H_5$, -COOH
$T_1$, $T_2$ = H, Cl, Br, gegebenenfalls substituiertes $C_1$-$C_4$-Alkyl, $C_1$-$C_4$-Alkoxy, Phenyl, Phenoxy
n = 0, 1, 2
W = Brückenglied
X = Sauerstoff- oder Schwefel

Beispiele für R sind: -H, $-CH_3$, $-C_2H_5$, n-$C_3H_7$, i-$C_3H_7$, n-$C_4H_9$, i-$C_4H_9$, die beispielsweise durch -OH, $-OCH_3$, $-OC_2H_5$, -COOH, $-SO_3H$, $-O-SO_3H$, -CN, -Cl substituiert sein können.

Geeignete Substituenten $R_1$ sind: $-CH_3$, $-C_2H_5$, -Cl, $-OCH_3$, $-OC_2H_5$, -COOH.

Substituenten der gegebenenfalls substituierten $C_1$-$C_4$-Alkyl- und $C_1$-$C_4$-Alkoxyreste $T_1$ bzw. $T_2$ sind beispielsweise: $-OCH_3$, $OC_2H_5$, $-O-SO_3H$.

Substituenten der gegebenenfalls substituierten Phenyl-und Phenoxyreste $T_1$ bzw. $T_2$ sind beispielsweise: -Cl, -Br, $-CH_3$, $-C_2H_5$, $-OCH_3$, $-OC_2H_5$.

Geeignete Brückenglieder W sind beispielsweise -CO-sowie Reste von aliphatisch-konjugierten, aromatischcarbocyclischen oder aromatisch-heterocyclischen Dicarbonsäuren.

Als Beispiele für W seien genannt:

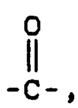
,
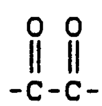
,
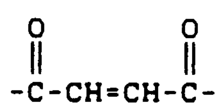
,

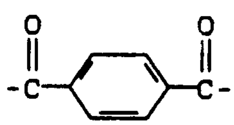
,
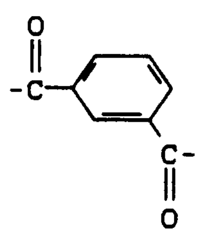
,
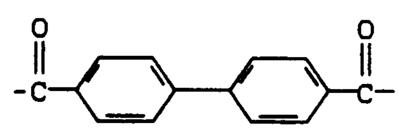
,

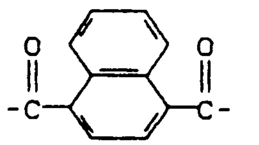 , 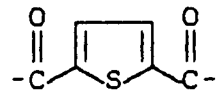 , 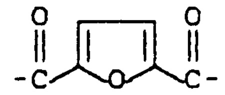 ,

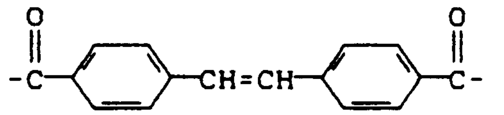 , 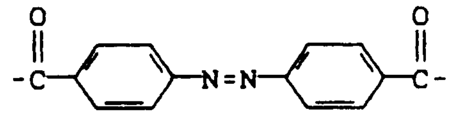 ,

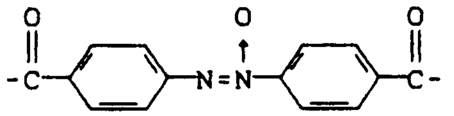 .

Bevorzugte Farbstoffe sind solche mit X = 0.

Besonders bevorzugt sind Farbstoffe der Formel (I), in denen

R = H,

$R_1$ = H,

$T_1$, $T_2$ = Cl,

n = 1

X = -O- ist und

W = die oben angegebene Bedeutung hat, insbesondere solche, in denen W = -CO-.

Gegenstand der Erfindung ist weiterhin ein Verfahren zur Herstellung der Farbstoffe der allgemeinen Formel (I). Es ist dadurch gekennzeichnet, daß man einen Triphendioxazin- bzw. Triphendithiazin-Farbstoff der Formel

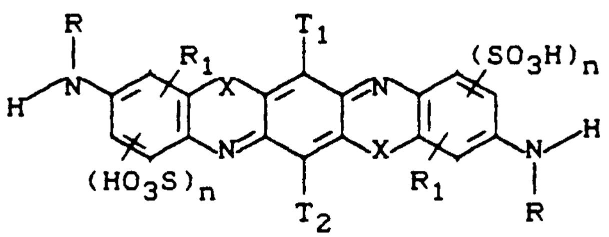 (II)

mit Phosgen oder Oxalylchlorid bzw. den Dihalogeniden aliphatisch-konjugierter, aromatisch-carbocyclischer oder aromatisch-heterocyclischer Dicarbonsäuren im Molverhältnis 2 : 1 unter Abspaltung von 2 Mol Halogenwasserstoffsäure umsetzt.

Die Umsetzung erfolgt vorzugsweise in Gegenwart äquivalenter Mengen basischer Verbindungen, vorzugsweise Alkali- oder Erdalkali-hydroxiden, -oxiden, -carbonaten oder -hydrogencarbonaten bzw. tertiärer organischer Stickstoffbasen, insbesondere aliphatischer Amine wie Trialkanolaminen, Dialkylalkanolaminen oder Alkyl-dialkanolaminen oder aromatischr Stickstoffbasen wie Pyridin, Picolinen und Chinolin.

Geeignete basische Verbindungen sind beispielsweise Li-, Na-, K-, Mg- oder Ca-hydroxide, -oxide, -carbonate oder -hydrogencarbonate, Triethanolamin, Methyl-diethanolamin, Di-methyl-ethanolamin sowie Umsetzungsprodukte von Ammoniak mit mehr als 3 Mol Ethylenoxid oder Propylenoxid.

Farbstoffe der Formel (I) mit W = Rest einer Diarylazo-bzw. Diarylazoxy-dicarbonsäure können auch folgendermaßen hergestellt werden:

(II) wird zunächst im Molverhältnis 1 : 1 mit einem Nitroarylcarbonsäurehalogenid acyliert und anschließend nach an sich bekannten Verfahren, z. B. mit Zucker, zusammenreduziert.

Die Ausgangsverbindungen (II), insbesondere auch die in den Beispielen angegebenen, sind bekannt (vergl. beispielsweise DE-A 21 24 080, Beispiel 1; DE-A 34 23 581, Beispiel 1 a und 1 b) bzw. lassen sich analog den dort beschriebenen Verfahren herstellen.

Die neuen Farbstoffe ergeben auf natürlichen und synthetischen OH- und NH-haltigen Materialien wie Baumwolle, Papier, Leder, Polyamid klare blaue Färbungen, die sich durch hohe Farbstärke sowie gute Licht- und Naßechtheiten auszeichnen.

Beispiel 1

110 Teile des Triphendioxazin-Farbstoffes der Formel

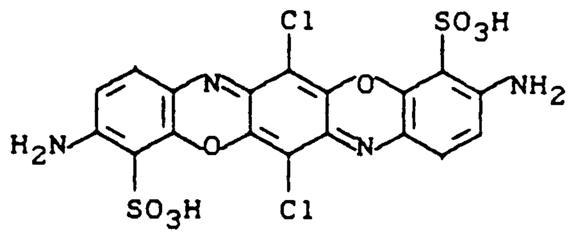

werden in ca. 4 Liter Wasser neutral gelöst. Anschließend werden im Laufe mehrerer Stunden bei Raumtemperatur unter kräftigem Rühren ca. 400 Teile Phosgen eingeleitet. Gleichzeitig wird unter Zugabe einer Lithiumhydroxid-Lösung der pH-Wert der Reaktionsmischung neutral gehalten. Um die Reaktion zu beenden ist es zweckmäßig, die Temperatur auf bis etwa 80 °C zu erhöhen. Anschließend wird kaltgerührt und der ausgefallene Farbstoff abfiltriert, getrocknet und gemahlen. Man erhält 280 Teile eines dunklen Farbstoffpulvers, das sich in Wasser mit klarer, blauer Farbe löst und auf Cellulose-Materialien brillantblaue Direkt-Färbungen von sehr hohen Echtheiten liefert.

Der Farbstoff entspricht in Form der freien Säure der folgenden Formel:

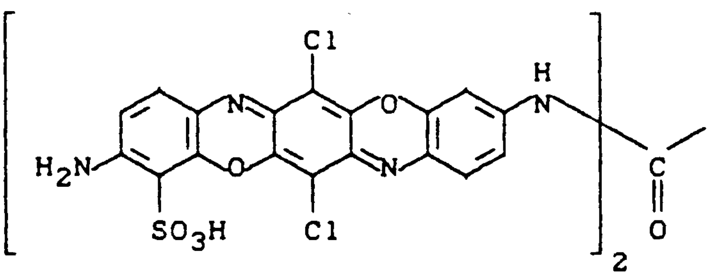

$\lambda_{max}$ 601 nm

Weitere interessante brillantblaue Farbstoffe erhält man, wenn man Phosgen durch die in der folgenden Tabelle genannten Säurehalogenide ersetzt.

Tabelle I

| Bsp. | Säurehalogenid | $\lambda_{max}$ [nm] |
|---|---|---|
| 2 | Cl-CO-CO-Cl | 592 |
| 3 | Cl-CO-CH=CH-CO-Cl | 594 |
| 4 | 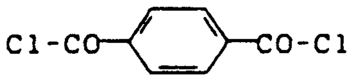 | 590 |
| 5 | 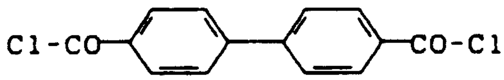 | 590 |
| 6 | 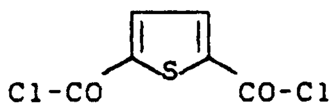 | |
| 7 | 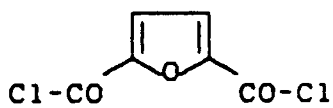 | |
| 8 | 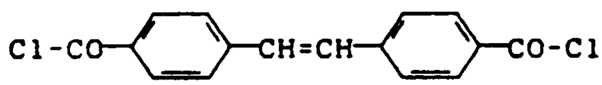 | 592 |

**Patentansprüche**

1. Triphendioxazin- bzw. Triphendithiazin-Direktfarbstoffe der Formel

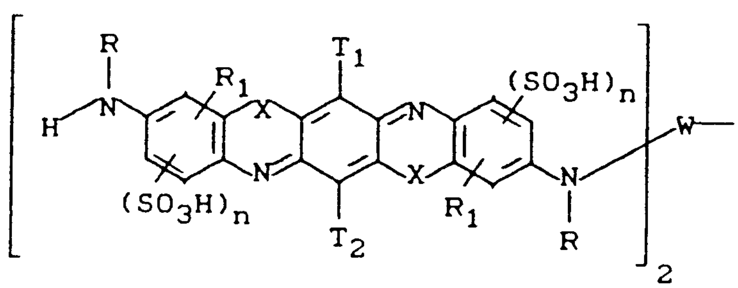

(I)

worin

| | |
|---|---|
| R = | H, gegebenenfalls substituierter $C_1$-$C_4$-Alkyl, |
| $R_1$ = | H, $-CH_3$, $-C_2H_5$, -Cl, $-OCH_3$, $-OC_2H_5$, -COOH |
| $T_1$, $T_2$ = | H, Cl, Br, gegebenenfalls substituiertes $C_1$-$C_4$-Alkyl, $C_1$-$C_4$-Alkoxy, Phenyl, Phenoxy |
| n = | 0, 1, 2 |
| W = | Brückenglied |
| X = | Sauerstoff- oder Schwefel. |

2. Farbstoffe des Anspruchs 1 mit
X = Sauerstoff.

3. Farbstoffe des Anspruchs 1 mit

| | |
|---|---|
| R, $R_1$ = | H |
| $T_1$, $T_2$ = | Cl |
| n = | 1 |
| X = | 0 |
| W = | Brückenglied, insbesondere -CO-. |

4. Verfahren zur Herstellung der Farbstoffe des Anspruchs 1, dadurch gekennzeichnet, daß man Farbstoffe der Formel

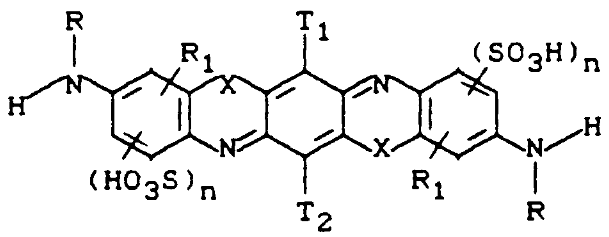

(II)

im Molverhältnis 2 : 1 mit Phosgen, Oxalylchlorid oder einem Dihalogenid einer aliphatisch-konjugierten, aromatisch-carbocyclischen oder aromatisch-heterocyclischen Dicarbonsäure unter Abspaltung von 2 Mol Halogenwasserstoffsäure umsetzt, bzw. in Gegenwart äquivalenter Mengen basischer Verbindungen.

5. Verfahren zur Herstellung von Farbstoffen des Anspruchs 1 mit.

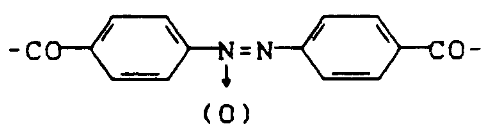

dadurch gekennzeichnet, daß man Farbstoffe der Formel

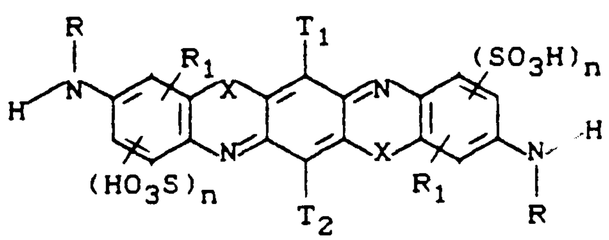

(II)

im Molverhältnis 1 : 1 mit einem Säurehalogenid der Formel

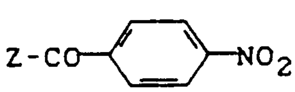

worin Z = Halogen, insbesondere Cl, umsetzt und anschließend in bekannter Weise zur Azo- bzw. Azoxyverbindung zusammenreduziert.

6. Verwendung der Farbstoffe der Ansprüche 1 - 2 zum Färben von natürlichen und synthetischen OH- und NH-haltigen Materialien.

## Claims

1. Triphendioxazine and triphendithiazine direct dyestuffs of the formula

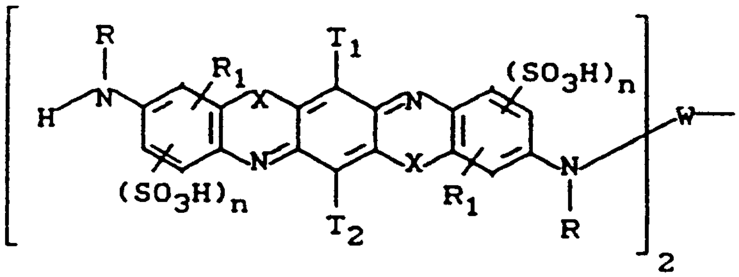
(I)

in which

| | |
|---|---|
| R is | H, substituted or unsubstituted $C_1$-$C_4$-alkyl, |
| $R_1$ is | H, $-CH_3$, $-C_2H_5$, -Cl, $-OCH_3$, $-OC_2H_5$, -COOH, |
| $T_1$, $T_2$ are | H, Cl, Br, substituted or unsubstituted $C_1$-$C_4$-alkyl, $C_1$-$C_4$-alkoxy, phenyl, phenoxy, |
| n is | 0, 1, 2, |
| W is | a bridge member and |
| X is | oxygen or sulphur. |

2. Dyestuffs of Claim 1 in which
X is oxygen.

3. Dyestuffs of Claim 1 in which

| | |
|---|---|
| R, $R_1$ are | H |
| $T_1$, $T_2$ are | Cl, |
| n is | 1, |
| X is | O and |
| W is | a bridge member, in particular -CO-. |

4. Process for the preparation of the dyestuffs of Claim 1, characterized in that dyestuffs of the formula

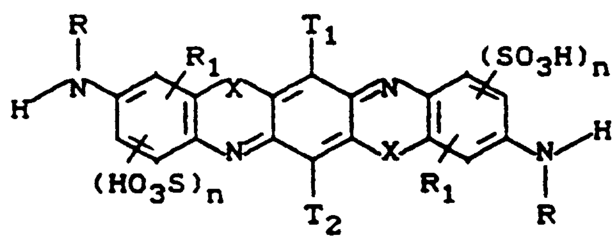
(II)

are reacted in a molar ratio of 2 : 1 with phosgene, oxalyl chloride or a dihalide of an aliphatic-conjugated, aromatic-carbocyclic or aromatic-heterocyclic dicarboxylic acid with the elimination of 2 mol of hydrohalic acid and/or in the presence of equivalent amounts of basic compounds.

5. Process for the preparation of dyestuffs of Claim 1, containing

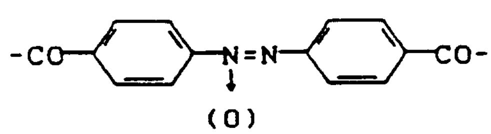

characterized in that dyestuffs of the formula

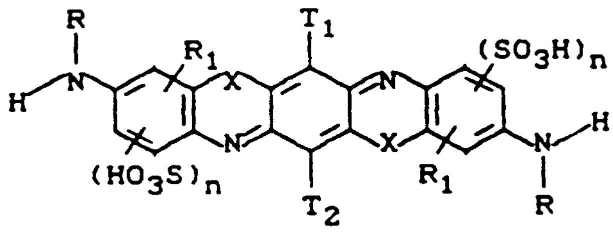

(II)

are reacted in a molar ratio of 1 : 1 with an acid halide of the formula

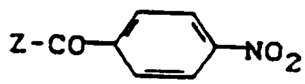

in which Z is halogen, in particular Cl, and then reduced to the azo or azoxy compound in a known manner.

**6.** Use of the dyestuffs of Claims 1 - 2 for the dyeing of natural and synthetic OH- and NH-containing materials.

**Revendications**

**1.** Colorants directs de triphénodioxazine et de triphénodithiazine de formule

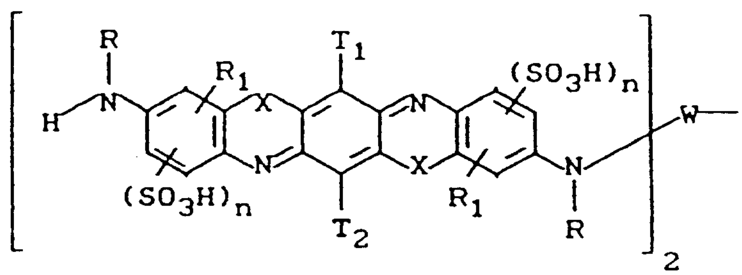

(I)

dans laquelle

| | |
|---|---|
| R | représente H, un groupe alkyle en $C_1$ à $C_4$ éventuellement substitué, |
| $R^1$ | représente H, $-CH_3$, $-C_2H_5$, -Cl, $-OCH_3$, $-OC_2H_5$, -COOH, |
| $T_1$, $T_2$ | représentent H, Cl, Br, un groupe alkyle en $C_1$ à $C_4$ éventuellement substitué, alkoxy en $C_1$ à $C_4$, phényle, phénoxy |
| n | a la valeur 0, 1 ou 2 |
| W | est un terme de pontage |
| X | représente l'oxygène ou le soufre. |

**2.** Colorants suivant la revendication 1, dans lesquels :
X représente l'oxygène.

**3.** Colorants suivant la revendication 1, dans lesquels :

| | |
|---|---|
| R, $R^1$ | représentent H |
| $T_1$, $T_2$ | représentent Cl |
| n | a la valeur 1 |
| X | représente O |
| W | est un terme de pontage, en particulier -CO-. |

**4.** Procédé de production des colorants suivant la revendication 1, caractérisé en ce qu'on fait réagir des colorants de formule

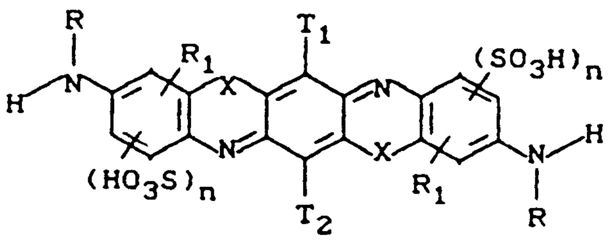

(II)

dans le rapport de 2:1 avec le phosgène, le chlorure d'oxalyle ou un dihalogénure d'un acide dicarboxylique aliphatique-conjugué, aromatique-carbocyclique ou aromatique-hétérocyclique avec élimination de 2 moles d'acide halogénhydrique, ou en présence de quantités équivalentes de composés basiques.

**5.** Procédé de production de colorants suivant la revendication 1, dans lesquels W représente

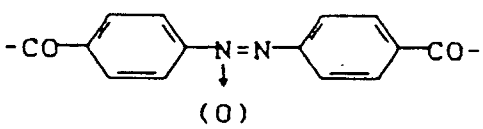

caractérisé en ce qu'on fait réagir des colorants de formule

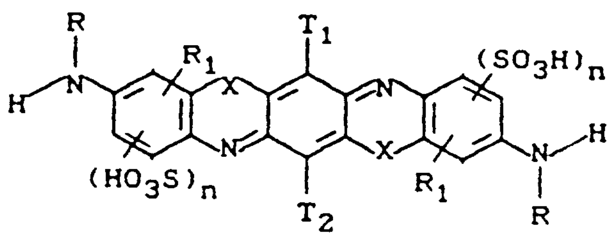

(II)

dans le rapport molaire de 1:1 avec un halogénure d'acide

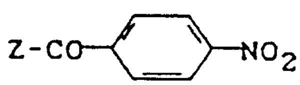

dans laquelle Z représente un halogène, notamment le chlore, puis on les réduit conjointement d'une manière connue en composé de type azo ou azoxy.

**6.** Utilisation des colorants suivant les revendications 1 et 2, pour la teinture de matières naturelles et synthétiques contenant des groupes OH et NH.